# EUROPEAN PATENT APPLICATION

(11) **EP 2 426 427 A2**
(43) Date of publication of application: **07.03.2012**
(21) Application number: 11177912.0
(22) Date of filing: 18.08.2011
(51) Int. Cl.: F24F 13/02, F16L 55/033

(54) **Helical silencer of the modular and assemblable type, in particular for ducts or channels for ventilation, air-conditioning or the like**

(30) Priority: 03.09.2010 IT BO20100089 U
(71) Applicant: EUR.EX S.r.l., 47899 Serravalle (SM)
(72) Inventor: Santi, Emiliano, 47899 Serravalle (SM)
(74) Representative: Porsia, Dino

(57) **Abstract**

Helical silencer, in particular for ducts or channels for ventilation, air-conditioning or the like, of the type which comprises a tubular body (T, 6) coated on the inner surface with at least one layer of any material also having sound-absorbing properties, and which comprises a helical channelling element, which is situated inside and longitudinally in said tubular body and which is in contact with said inner coating so as to force the air which passes through said tubular body to follow an elongate helical path, which leads said air to interact with said sound-absorbing coating, which provides for the reduction in the noise possibly carried by the air, wherein said helical channelling element is formed by at least one helix of sufficiently rigid plastic material, which engages on the entire free section of the tubular body (T, 6), which has a greatly limited transverse dimension and which, with the peripheral edges of the helix or helices thereof, cooperates intimately with the sound-absorbing coating (5), which coats the lateral inner surface of said tubular body (T, 6) and which has a wall thickness which is limited and advantageous for the intended purposes of said coating, the whole arrangement being such that the flow of air which passes through the silencer is subjected to limited head losses, and consequently being such that said silencer can be realized with a free inner transverse section for the flow of air at least of the order of about 100 cm2, and with a limited outer dimension which is such that the same silencer can be mounted in said tubular body (T, 6) of limited diameter, preferably of about 160 mm.

## Description

The invention relates to a modular and assemblable helical silencer for attenuating noises in a hole, duct or channel for ventilation or air-conditioning or for similar uses, through which the flow of air may be promoted, for example, by the action of a fan or by natural convection, for example by the difference in temperature or pressure which is present at the opposing ends of said duct or channel. The main intended use of the silencer in question is for holes or ducts for ventilation which are made in the walls of kitchens, bathrooms or other areas which require communication with the outside environment for the passage of air, which can flow outwards or inwards by convection. To attenuate the noises, devices are known which can be installed in the ventilation duct during the construction of the wall which has to bear said duct, for example devices of the type commercially available under the trademark PHONOBOX, or devices are known which can be mounted on an end of ducts which are already present or made instantly by a drilling operation, for example of the type commercially available under the trademark UFO. The devices of the first type have the advantage that they are invisible, but have the disadvantage that they cannot subsequently be maintained, whereas the devices of the other type are visible and generally also accomplish a grille function and can easily be maintained and periodically cleaned. The prior art also discloses silencing devices to be mounted in the holes or ducts which are already present or made by a probing operation, which afford the advantages of both the devices of the first type and of the second type mentioned above, in that they can be inserted a posteriori within the ventilation hole and, if there is the need, can be removed therefrom if maintenance or cleaning is required. Devices of this type are described, for example, in the French patent FR 2.692.021 of 1992 and in the Italian patent application for industrial model No. LC U 2008-6. A silencer called "California", produced by ISOFOM Srl., is also known, the features of which are published on the Internet site www.edilportale.com. All of these known devices make use of helical channelling inserts, which are made as a whole or in part of and/or are enclosed with at least sound-absorbing materials, so as to subject the flow of the air to an elongate path and to cyclical expansions, leading said air in contact with the sound-absorbing material, which lowers the noises. In some cases, bacteriological filters are also associated with these apparatuses.

None of the apparatuses of the known type solve the following resultant main problems:
- adaptability to holes or ducts of limited cross section, for example of the order of 160 mm, without substantially modifying the minimum flow rate characteristics of said holes or ducts. With the silencer according to the invention, it is possible for a usable cross section for the flow of air of the order of at least about 100 cm2 to be kept constant over the entire length of said silencer, both on the front section and in the lateral section of the inner helical path, inasmuch as, owing to its special inner form (see below), the same silencer in question has extremely limited head losses. The silencers produced according to the prior art, considered first, for achieving free sections for the flow of air of the value mentioned above or slightly higher, have an outer diameter such that they have to be inserted in holes or ducts having a diameter of at least about 200 mm, inasmuch as the inner form thereof is such that the flow of the air which passes through them is subjected to high head losses, which entails at least the following two kinds of problems: 1) predisposition in the walls of holes having a large diameter, with the resulting realization difficulties in the case of reconstructions; 2) the use of built-in, specific, cumbersome and costly ventilation grilles to be mounted on the ends of the ventilation hole, as opposed to the readily available, more economical grilles which can be used with the silencer according to the invention, for example the universal grilles with opposed spring securing at the rear which are suitable for holes measuring 160 mm;
- the ability to be assembled for and adapted to holes or ducts of any length, even holes or ducts which are very short or very long;
- the possibility to also be realized in the form of a cartridge of predefined length, in particular for large-scale distribution;
- the possibility for easy maintenance, cleaning, regeneration or replacement, even on the part of the user.

These and other problems have been solved by the following concept. The device comprises helical inserts which are made of suitable plastic material and have a limited length and are predisposed such that they can be mounted in succession so as to form a composite helix of suitable length which, in general, is correlated to that of the ventilation hole or duct in which said helix has to be mounted, and the cross section of which is correlated to that of said hole or duct, such as to intercept the entire air flow which passes through said hole or duct. The helix is enveloped or bound on the outer diameter with at least one mat or sheath made of suitable spongy, plastic material, and with the latter is inserted into the tube which usually finishes off the ventilation hole or into the tubular body of a cartridge, the purpose here being that, on account of the dimensioning of the various components and on account of the elastic and yielding properties of said spongy sheath, the latter will adhere intimately to the retaining tube and the helix will adhere intimately to said sheath. As a result, the flow of air which passes through the ventilation tube or duct finds an obstacle in the helix to direct propagation, and is forced, by said helix, to perform evolutions which lengthen the path and subject it to successive reflections and centrifugations, without however said flow of air undergoing substantial head losses on account of the smooth surface of the helix, on account of the limited transverse section thereof and on account of the limited wall thickness of said sound-absorbing sheath. The noise which possibly accompanies the air is reduced by the synergistic action of said helix and by said outer enveloping sheath.

Other features of the invention, and the advantages procured thereby, will become clearer in the course of the following description given with reference to the figures of the three appended sheets of drawings, in which:
- Figure 1 is a perspective view, broken up into the various components, of a helix formed by a plurality of assemblable modules;
- Figures 2 and 3 are perspective views respectively showing the bounding of the helix with a mat or a foam rubber sheath and the insertion of the whole arrangement within the tube, which normally finishes off a ventilation hole or duct;
- Figures 4 and 5 show the complex of the mounted silencer in operation, as seen respectively according to a longitudinal section and according to a transverse section;

- Figure 6 shows the complex of the silencer in the form of a cartridge and sectioned longitudinally;
- Figure 7 is a perspective view of the cartridge-like silencer shown in Figure 6.

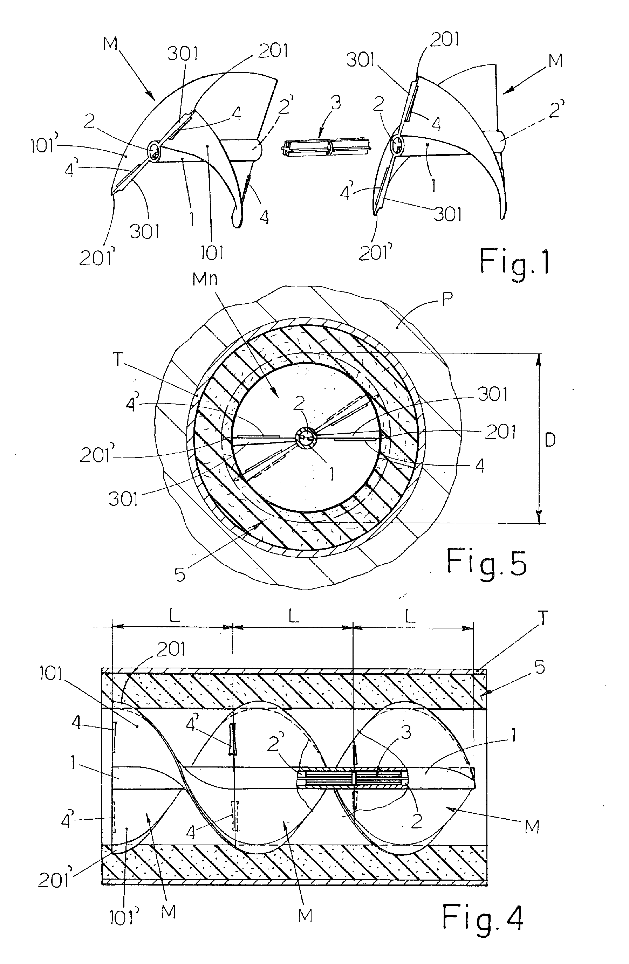

In Figures 1, 2 and 4, M denotes one of the helical modules which can be used to form the silencer in question, having an outer diameter D which is conveniently smaller than the inner diameter of the tube T, which finishes off a ventilation hole made in the wall P (Figure 5) or which forms a section of a ventilation duct or which forms the body of a cartridge (see below). By way of example, the silencer can be positioned in a conventional tube T having an outer diameter of about 160 mm, and in this case the outer diameter of the module M may be about 113-114 mm. The length L of the module M is preferably slightly less than 100 mm, for example about 95-97 mm, inasmuch as the thickness of the walls P in which the ventilation holes are made usually has decimal values, and therefore it is possible to provide the tube T inserted into said holes so as to finish them off with one or more successive modules M, leaving sufficient free spaces at the ends of said tube so as to make it possible to position any completion grilles, for example of the type suitable for holes measuring 160 mm, provided at the rear with economical and readily commercially available opposed securing springs (see below).

The module M is preferably made by injection moulding a suitable plastic material, for example ABS, and comprises an axial hub 1 of limited diameter, for example of about 16 mm, on which two helices 101, 101' are supported and around which said helices are wound in the same direction and with the reciprocal offset of 180°, said helices, in the example in question, performing an evolution with an angular amplitude of less than 180°, for example of about 150°. This particular dimensioning of the module M and the length thereof mentioned above have been studied so as to ensure that the helices have angles of rotation and a number of evolutions which ensure extremely limited head loss of the flow of air which passes through the silencer according to the invention, owing also to the smooth surface of the walls of said module with which the air comes into contact and on which it substantially slides.

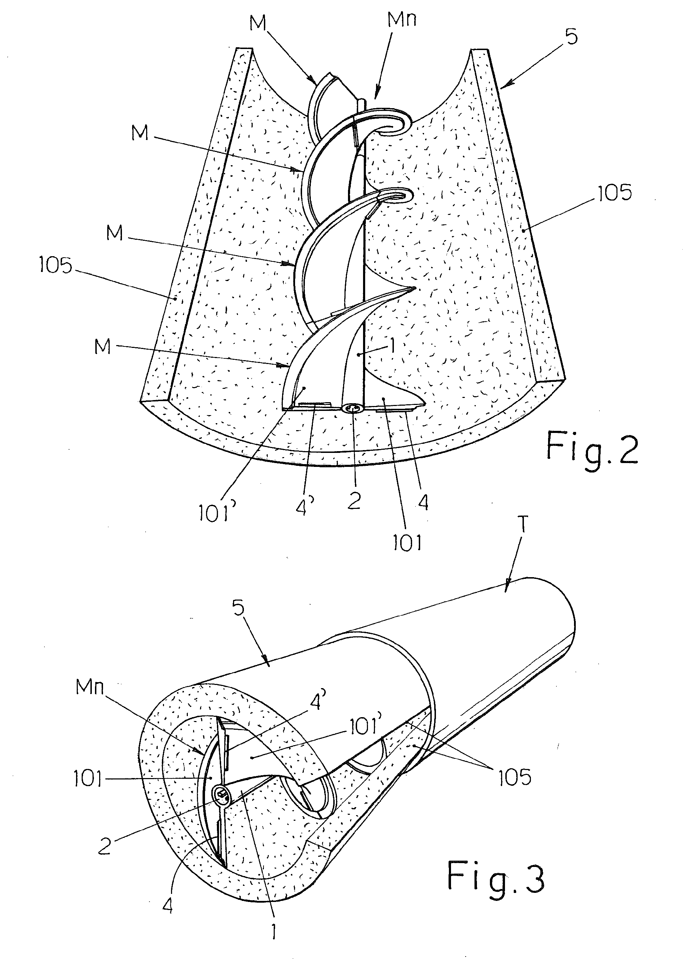

The ends of the helices 101 and 101' are nevertheless always diametrically opposed to one another at both ends of the module M, such that it is possible to align a plurality of modules M in succession so as to form a composite helical element, the length of which is given by the number of modules by the length of a module and in which the ends of the helices of a module abut against those of the following module, and said helices move with the same turning direction (see Figure 2 and see below). Appropriate means are provided so as to make it possible to mechanically interconnect the modules M and so as to ensure that the connection is intimate and mechanically locked. The axial hub 1 of each module is provided, for example, with axial, opposed seats 2, 2' having differing or identical profiling, into which it is possible to insert the ends of a pin 3 respectively having identical or differing profiling, the purpose here being that the coupling between said parts and the connection thereof is substantially forced and brings about the correct joining of a module M to the preceding or successive module. It is to be understood that, differently to that described, each module can be provided at a single end of the hub 1 with a seat, for example of the type indicated by 2, 2', and can be provided at the other end, in a single piece, with half the pin 3, possibly with transverse weakening on the proximal end, such that, if it is not needed, said pin can easily be detached. The front surface 301 of the ends of the helices 101, 101' can lie on a plane which is perpendicular to the axis of the module, or on a plane which is conveniently inclined, such that it has a larger transverse extension, so as to allow for a more effective connection between said ends of the helices, which, for this same purpose, can be provided laterally with small protruding attachments 4, 4', which are mutually offset such as to be positioned on either side of and in opposed pairs on each end of the helices of a plurality of modules joined together in succession, and also such as to perform reciprocal centring functions for these ends of the helices.

The longitudinal free edges of the helices 101, 101' have a profile tapered to the outside, as indicated by 201, 201' in Figures 4 and 5, so as to ensure improved cooperation between the helical structure Mn formed by the modules M and a mat 5 of suitable thickness made of any suitable sound-absorbing material, which is then wound all around and along the entire longitudinal extension of said helical structure Mn, in such a way as to form a sheath which completely envelops said structure. If use is made of a mat as shown in Figures 2 and 3, the longitudinal free edges 105 thereof can be fixed reciprocally using lengths of adhesive tape or using other suitable means, which are not illustrated, so as to form a paratubular structure. According to a different embodiment, instead of the mat 5 it is possible to use a corresponding tubular stocking, which is made of an identical sound-absorbing material and into which the helical structure Mn can be inserted by screwing or by means of an appropriate splaying tool, which can easily be realized by experts in the field. Said mat 5, or the corresponding tubular sheath, may be made, for example, of a polyurethane foam with open or closed cells. Said sheath 5 has to wrap intimately around the tube T and at the same time has to operate with correct friction with the outer edges 201 of the helical structure Mn. If the helical structure Mn has, for example, an outer diameter of about 114 mm, and if the outer diameter of the tube T is, for example, about 160 mm, as mentioned above, with an inner diameter of about 156.5 mm, the free play of the crown between the parts Mn and T is about 22-23 mm, and therefore the thickness of said mat 5 may be of the order of 25-30 mm. If the ventilation tube T borders on the outside of a structure, said tube T may at first be provided with a grille on the outer front, for example of the type with reducible dimensions, which can be inserted from the inside, after which the silencer is mounted in said tube as described and finally a further grille of any suitable type is applied to the inner front of said tube, for example of the type with quick-action spring fastenings. However, it is to be understood that the silencer according to the invention also has to be considered as being protected when used in air-conditioning ducts or channels, independently of the possible grilles mentioned above.

The operation of the silencer according to the invention is simple and obvious. The noises which accompany the flow of air passing through the silencer, as can be seen in Figure 4, find an obstacle in the helical structure Mn to direct propagation, and therefore these noises, together with the air, are forced to follow the evolutions imposed by the helices 101, 101' of said structure Mn, and therefore to complete a path which is longer than a horizontal, direct path, to undergo different reflections and to be substantially centrifuged outwards. The layer formed all around the helical structure Mn by the mat or by the sheath 5 provides for the attenuation and lowering of the incident acoustic waves reflected by said structure Mn along the entirety of the long path which said structure establishes in the stocking 5 and in the tube T. The system as a whole allows for a good flow of air through a free surface of about 100 cm2 along the entire length of the silencer, as provided for by the present safety rules for the ventilation of areas intended for example for kitchens, in which gas burners operate. The condition mentioned above is complied with since the helical complex Mn is made of substantially rigid plastic, with a hub 1 of minimal cross section and therefore with said helical complex Mn having a very limited transverse dimension, and since the stocking 5 has a limited wall thickness. These conditions, together with the smooth surface of the modules M which form the helical complex Mn and with the angle of rotation and with the number of evolutions of said helical complex as described, have the effect that the silencer according to the invention has much reduced head losses, such that said silencer can be designed for insertion into holes or ducts of limited cross section, for example of 160 mm, as mentioned above, and it is possible for any grilles of the universal, economical and readily available type to be mounted on the ends of said ventilation hole or duct, said grilles being suitable for holes measuring 160 mm and being of the type, for example, with rear opposed spring fastenings.

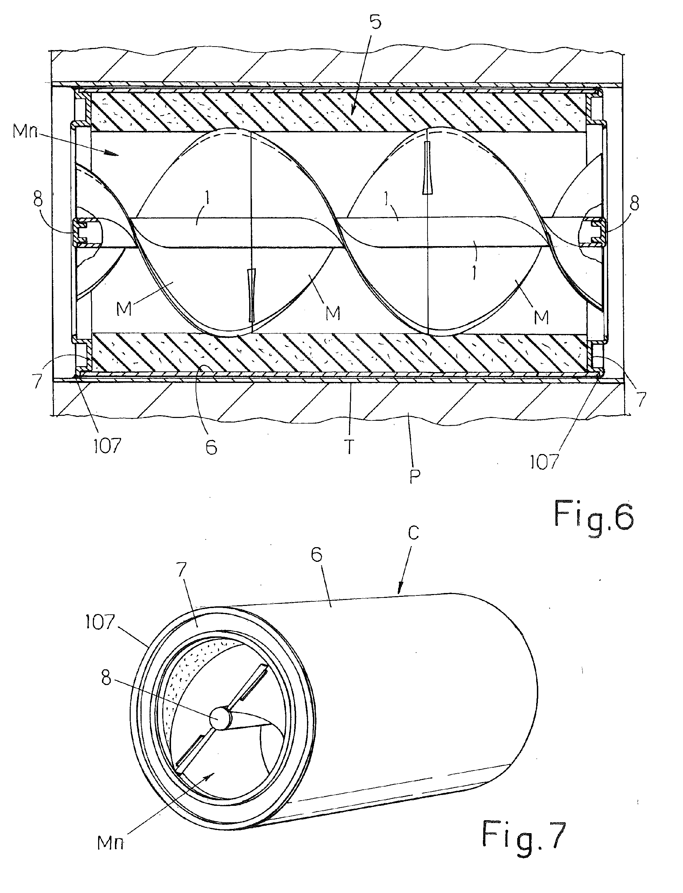

The scope of the invention also includes the variant illustrated in Figures 6 and 7, according to which the silencer as described is realized in the form of a cartridge C having a length, for example, of about 29-29.5 cm, suitable for standard walls with a thickness of around 30 cm. In this case, the helical complex Mn formed by a plurality of modules M, with the sound-absorbing stocking 5, is housed inside a body 6 formed by a length of commercial PVC tube, having an outer diameter of for example 155 mm, of the length mentioned above, which is provided at the ends with annular, ambidextrous caps 7, which are made for example by moulding of ABS and are such as to retain the parts Mn and 5 inside said body 6. These caps may advantageously have, integrally on the outer edge thereof, at least one small protrusion 107, which is sufficiently flexible and/or elastically yielding and can cooperate and form a seal with the lateral inner surface of the tube T, having as mentioned an outer diameter of 160 mm and a corresponding inner diameter of about 156.5 mm. In Figures 6 and 7, 8 denotes caps of plastic material which can be press-fitted within the seats 2, 2' at the ends of the helical complex Mn, which would otherwise remain open. These small axial caps can also be used in the solution of the assemblable silencer.

As can be seen from Figures 1 to 5. The silencer in the form of a cartridge C may be designed for large-scale distribution for DIY customers, whereas in the specialized stores for construction material, the fitters can find the helical modules M, with the pins 3, with the mat 5 and with the axial caps 8, for producing silencers adapted for walls having a thickness of greater than 30 cm, for example also for walls having a thickness of up to 50 cm and more.

It is to be understood that the following small modifications can also be made to the device as described. The inner surface of the stocking or mat 5 can conveniently be corrugated or finned, preferably in a helical form, so as to increase the contact surface with the air and with the noise, thereby limiting the head losses. The stocking or mat 5 can be made of composite material, for example loaded with activated carbons and/or with other materials so as to also perform the function of a filter for the filtering out of germs, noxious gases or other impurities. The modules M, at least with the surface of the helices 101, 101', can also be predisposed for attenuation of the sound, for example with a rough or finned form, but always with a helical form, for limiting the head losses and/or with a coating with a material which is advantageous for the purpose, for example with a suitable elastomer. The modules M can be predisposed with forms which are such that said modules can be joined to one another in the same screwing direction of the helices thereof, as illustrated in the drawings, or in an opposite, alternating screwing direction, such as to further decelerate the flow of air and of the noise, with an improvement in the sound-reducing properties of the silencer, primarily if the latter is intended to be inserted in tubes or ducts of limited length.

## Claims

1. Helical silencer, in particular for ducts or channels for ventilation, air-conditioning or the like, of the type which comprises a tubular body (T, 6) coated on the inner surface with at least one layer of any material also having sound-absorbing properties, and which comprises a helical channelling element, which is situated inside and longitudinally in said tubular body and which is in contact with said inner coating so as to force the air which passes through said tubular body to follow an elongate helical path, which leads said air to interact with said sound-absorbing coating, which provides for the reduction in the noise possibly carried by the air, **characterized in that** said helical channelling element is formed by at least one helix of sufficiently rigid plastic material, which engages on the entire free section of the tubular body (T, 6), which has a greatly limited transverse dimension and which, with the peripheral edges of the helix or helices thereof, cooperates intimately with the sound-absorbing coating (5), which coats the lateral inner surface of said tubular body (T, 6) and which has a wall thickness which is limited and advantageous for the intended purposes of said coating, the whole arrangement being such that the flow of air which passes through the silencer in question is subjected to limited head losses, and consequently being such that said silencer can be realized with a free inner transverse section for the flow of air at least of the order of about 100 cm2, and with a limited outer dimension which is such that the same silencer in question can be mounted in said tubular body (T, 6) of limited diameter, preferably of about 160 mm, with all the advantages derived from this condition.

2. Silencer according to Claim 1), wherein said helical channelling element is formed by a plurality of helical modules (M) of limited length, which are situated in succession and are provided with means for reciprocal mechanical connection, for forming a sufficiently compact composite structure (Mn), the purpose here being to make it possible to also realize silencers of variable length which are adapted to the different requirements of use.

3. Silencer according to Claim 1), wherein each module (M) is made by injection moulding a suitable plastic material, and comprises an axial hub (1) on and around which one or more helices (101, 101') are supported and wound, provision being made of means for reciprocally connecting and fixing the ends of said modules so as to form said composite helical channelling structure (Mn).

4. Silencer according to Claim 3), wherein said means for reciprocally connecting and fixing the helical modules (M) comprise a pin (3) predisposed for insertion into seats (2, 2') provided on the opposing ends of the hub of the modules (M), said pin and said seats being predisposed with forms of forced coupling such that the modules abut against one another with reciprocal alignment and matching of the end or ends (301) of the helix or helices (101, 101').

5. Silencer according to Claim 4), wherein it is possible to provide some small caps of plastic material (8) to close the seats (2, 2') at the ends of the hubs (1) of the helical complex (Mn), which would otherwise remain open.

6. Silencer according to Claim 3), wherein said means for reciprocally connecting and fixing the helical modules (M) also comprise small protruding attachments (4, 4') on the ends of the helix or helices (101, 101') of each module (M), these attachments ensuring the correct centring and alignment between the ends of the helices of the various modules (M) situated and fixed in succession.

7. Silencer according to Claim 2), wherein the front surface (301) of the ends of the helices (101, 101') lies on a plane which is not perpendicular to the axis of the module (M), but instead is conveniently inclined with respect thereto, such that said front surface (301) has a large transverse extension, so as to allow for a more effective connection between the ends of the helix or helices of the successive modules (M).

8. Silencer according to Claim 2), wherein the helical modules (M), at least with the surface of the helices (101, 101') thereof, can also be predisposed for attenuation of the sound, for example with a finned helical superficial form and/or with a coating with a material which is advantageous for the purpose, for example with a suitable elastomer, the purpose here however being that of limiting the head losses.

9. Silencer according to Claim 2), wherein said helical module (M) is preferably made by injection moulding a suitable plastic material, for example ABS, and comprises an axial hub (1) of limited diameter, for example of about 16 mm, on which two helices (101, 101') are supported and around which said helices are wound in the same direction and with the reciprocal offset of 180°, said helices performing an evolution with an angular amplitude of less than 180°, for example of about 150°, along a length (L) of the module (M), which is preferably slightly less than 100 mm, for example about 95-97 mm, the outer diameter of the helical module (M) being about 114 mm, the purpose here being that, upon insertion into a tube or duct (T) having a diameter of 160 mm, the free play of the crown between said parts (M, T) is about 22-23 mm, and therefore the thickness of said sound-absorbing mat (5) may be of the order of about 25-30 mm.

10. Silencer according to Claim 1), wherein said sound-absorbing coating, engaging on the space present between the lateral inner surface of said tubular body (T, 6) and the inner helical channelling element (Mn), is realized in the form of a mat or sheath (5), which is made of any suitable sufficiently elastic and yielding sound-absorbing material and is intimately fitted all around and along the entire length of the helical channelling element and, with the latter, is inserted into said tubular body (T, 6), such as to adhere intimately to the latter and to said helical channelling element (Mn), on account of the dimensional characteristics of the various parts and on account of the elastic and yielding properties of said sheath or mat (5).

11. Silencer according to Claim 10), wherein said sheath or mat (5) is made of any suitable sufficiently elastic and yielding material, for example of an expanded polyurethane resin.

12. Silencer according to one or more of the preceding claims, **characterized by** the ability to be realized in the form of a cartridge (C) having a length of slightly less than 30 cm, with the composite helical complex (Mn) and with the sound-absorbing mat or sheath (5) housed in a tubular body (6) made of plastic material with an outer diameter suitable for insertion into holes or ducts (T) having a diameter of 160 mm, in which said components (Mn, 5) are retained by end annular caps (7), which are also made of suitable plastic material and may have, on the outer diameter, at least one respective small protrusion (107), which can cooperate and form a seal with the lateral inner surface of the tube or duct (T), into which said body (6) of the cartridge can thereby be inserted in substantially airtight conditions.
